# EUROPÄISCHE PATENTSCHRIFT

(11) **EP 1 641 650 B1**
(45) Veröffentlichungstag und Bekanntmachung des Hinweises auf die Patenterteilung: **03.07.2013**
(21) Anmeldenummer: 04732606.1
(22) Anmeldetag: 13.05.2004
(51) Int. Cl.: B60L 7/22

(54) **BERSPANNUNGSBEGRENZER FÜR EINEN TRAKTIONSSTROMRICHTER**
SURGE LIMITER FOR A TRACTION POWER CONVERTER
LIMITEUR DE SURTENSION CONCU POUR UN CONVERTISSEUR DE COURANT DE TRACTION

(30) Priorität: 04.07.2003 DE 10330284
(43) Veröffentlichungstag der Anmeldung: 05.04.2006
(73) Patentinhaber: Siemens Aktiengesellschaft, 80333 München (DE)
(72) Erfinder: BAKRAN, Mark-Matthias, 91052 Erlangen (DE); HOFSTETTER, Matthias, 91056 Erlangen (DE)
(86) Internationale Anmeldenummer: PCT/EP2004/005150
(87) Internationale Veröffentlichungsnummer: WO 2005/002904

(56) Entgegenhaltungen:
- EP-A- 0 488 163
- EP-A- 0 584 373
- WO-A-02/066293
- DE-A- 19 522 563

## Beschreibung

Die Erfindung bezieht sich auf eine Vorrichtung zur Begrenzung einer Überspannung im Zwischenkreis eines Traktionsstromrichters gemäß Oberbegriff des Anspruchs 1.

Ein Traktionsstromrichter, insbesondere für einen Triebzug, weist typischerweise einen Pulswechselrichter auf, der wenigstens eine Induktionsmaschine, insbesondere Asynchronmaschine, speist. Im Fahrbetrieb wird Leistung aus einem Energieversorgungsnetz, insbesondere einem Bahnnetz, entnommen und mittels des Pulswechselrichters der Induktionsmaschine zugeführt. Im elektrischen Bremsbetrieb ist der Leistungsfluss umgekehrt. Da ein Bahnnetz nicht zu jedem Zeitaugenblick die Bremsenergie aufnehmen kann, muss zusätzlich eine Vorrichtung im Zwischenkreis installiert sein, mit deren Hilfe diese Bremsenergie vernichtet werden kann.

Außerdem ist im Zwischenkreis des Traktionsstromrichters eine Vorrichtung zur Überspannungsbegrenzung angeordnet, die vorrangig zum Schutz des Pulswechselrichters benötigt wird. Mittels einer solchen Vorrichtung werden schnelle Überspannungen begrenzt, die beispielsweise durch Sprünge in der Netzspannung oder durch Leistungsschwankungen in der Traktionsleistung verursacht werden.

Beispiele für derartige Traktionsstromrichter sind der Veröffentlichung "Triebzüge für das Bangkok Mass Transit System", abgedruckt in der DE-Zeitschrift "eb - Elektrische Bahnen", Band 97 (1999), Heft 6, Seiten 195 und 196, der Veröffentlichung "Triebzüge Baureihe 2100 für Flughäfenbahn Tokyo", abgedruckt in der DE-Zeitschrift "eb - Elektrische Bahnen", Band 97 (1999), Heft 6, Seiten 197 und 198 oder der Veröffentlichung "Stadtbahnzug TW 2000 für Hannover", abgedruckt in der DE-Zeitschrift "eb - Elektrische Bahnen", Band 97 (1999), Heft 6, Seiten 211 bis 213, zu entnehmen.

Die Funktionen "Bremsen" und "Überspannungsbegrenzung" wird beispielsweise in der erstgenannten Veröffentlichung "Triebzüge für das Bangkok Mass Transit System" miteinander in einem Bremssteller kombiniert. Mittels dieses Bremsstellers wird eine Überspannung im Zwischenkreis, die entweder durch Sprünge in der Netzspannung, Leistungsschwankungen in der Traktionsleistung oder durch nicht ins Netz abführbare Bremsleistung entsteht, abgebaut.

Im Handel sind Kondensatoren erhältlich, die durch ihr Speicherprinzip auch als Doppelschichtkondensatoren bezeichnet werden. Diese Doppelschichtkondensatoren liegen bezüglich ihrer elektrischen Nutzbarkeit zwischen den herkömmlichen Kondensatoren mit hohem Leistungsvermögen aber vergleichsweise niedrigem Energieinhalt und den konventionellen Batterien mit hohem Energieinhalt. Doppelschichtkondensatoren speichern und liefern Energie auch bei sehr großen Leistungen mit hohem Wirkungsgrad. Für Doppelschichtkondensatoren hat sich der Begriff "Superkondensator" bzw. "Supercap" bzw. "Ultracap" durchgesetzt.

Doppelschichtkondensatoren sind im Vergleich zu konventionellen Batterien tief entladefest und einfach zu laden. Allerdings gibt es zwei Randbedingungen, die unbedingt bei ihren Betrieb beachtet werden müssen:
1. Bei Überschreiten der spezifizierten "Maximalen Betriebsspannung" finden zerstörende, den Elektrolyt versetzende, Vorgänge statt.
2. Aufgrund von Fertigungstoleranzen können auch Doppelschichtkondensatoren gleichen Typs unterschiedliche Selbstentladungen und unterschiedliche Innenwiderstände aufweisen. Dadurch kann es bei in Serie geschalteten Doppelschichtkondensatoren bereits nach wenigen Ladezyklen zu einem Auseinanderdriften der Betriebsspannung der Doppelschichtkondensatoren kommen, was beim Laden zur Überschreitung der spezifizierten "Maximalen Betriebsspannung" einzelner Doppelschichtkondensatoren und somit zu deren Schädigung führt. Um dies zu verhindern, ist eine elektrische Zusatzbeschaltung der Kondensatoren zur Überwachung oder zum Ladungsausgleich nötig.

Doppelschichtkondensatoren gibt es im Handel in einer zylindrisch gewickelten oder einer geschichtet prismatischen Zellenkonstruktion. Für die Anwendungsfälle Elektrostraßenfahrzeuge oder Netzanwendungen werden Kondensatorzellen zu einem Kondensatormodul verschaltet, die beispielsweise vierzig Kondensatorzellen aufweist.

Aus der EP 1 245 431 A2 ist ein Hybridenergiemanagement-System bekannt. Ein derartiges System wird bei einer dieselelektrischen Lokomotive eingesetzt. Diese dieselelektrische Lokomotive weist außerdem ein Widerstandsnetzwerk auf, das beim Bremsbetrieb der Elektromotoren dieser Lokomotive mit dem DC-Bus dieser dieselelektrischen Lokomotive verschaltet wird. Mittels dieses Widerstandsnetzwerks wird die Bremsenergie in Wärme umgewandelt und an die Umgebung abgeführt.

Damit wenigstens ein Teil der Bremsenergie wieder verwendet werden kann, weist diese dieselelektrische Lokomotive eine gattungsgemäße Vorrichtung zur Begrenzung einer Überspannung im Zwischenkreis ihres Traktionsstromrichters auf. Zur Speicherung der Bremsenergie können ein Batteriesystem, ein Schwungradsystem oder ein Ultracapsystem als Speichersystem vorgesehen sein. Diese Speichersysteme können einzeln oder in einer Kombination mehrerer Speichersysteme verwendet werden. Beispielsweise kann ein Batteriesystem mit einem Schwungradsystem oder einem Ultracapsystem kombiniert werden. Das Batteriesystem speichert Energie sehr langsam, hat jedoch eine sehr große Kapazität. Dagegen kann ein Schwungradsystem Energie sehr schnell aufnehmen, ist aber in seiner Kapazität beschränkt. Das Ultracapsystem kann wie das Schwungradsystem eine Energie sehr schnell aufnehmen, wobei seine Kapazität von der Anzahl und der Verschaltung abhängig ist.

Aus der DE 195 22 563 A1 ist eine Rekuperativ-Bremsanlage mit Kondensator-Speicher für ein Elektrofahrzeug, insbesondere Elektroauto, bekannt. Die beim rekuperativen Bremsen erzeugte Elektroenergie oder ein Teil davon wird in einem Kondensator gespeichert. Diese im Kondensator gespeicherte Energie wird dann an eine Batterie des Elektrofahrzeugs bei geregeltem Strom abgegeben. Dieser Kondensator-Speicher ist deshalb vorgesehen, da beim rekuperativen Bremsen ein Strom entsteht, der den maximal zulässigen Ladestrom der aufladbaren Batterien des Elektrofahrzeugs um ein Vielfaches überschreitet. Ohne den Kondensator-Speicher könnte nur ein ziemlich geringer Teil der Bremsenergie wiederverwendet werden.

Der Erfindung liegt nun die Aufgabe zugrunde, die bekannte Vorrichtung derart weiterzubilden, dass eine am Doppelschichtkondensator anstehende Spannung sich in einem zulässigen Bereich aufhält.

Diese Aufgabe wird erfindungsgemäß durch das kennzeichnende Merkmal des Anspruchs 1 gelöst.

Mit dem zuschaltbaren Widerstand, der elektrisch parallel zum Doppelschichtkondensator schaltbar ist, wird die Spannung am Doppelschichtkondensator auf einen vorbestimmten Grenzwert begrenzt. Unterschreitet die Kondensatorspannung einen unteren Grenzwert, so wird der Widerstand wieder getrennt. Auf diese Weise wird verhindert, dass der Doppelschichtkondensator seine Nennspannung für eine längere Zeit überschreiten kann. Die gespeicherte Energie wird im Fahrbetrieb in den Traktionsströmrichter zurückgegeben, so dass der Doppelschichtkondensator auf einen Ladezustand gehalten wird, der immer ausreicht, eine Überspannung aus dem Zwischenkreis aufzunehmen. Der Widerstand wird somit nur bei längeren Überspannungen im Zwischenkreis verursacht durch Bremsen zum Abbau dieser Überspannung benötigt, ohne dabei einen eigenen Steller zu benötigen.

Bei einer vorteilhaften Ausgestaltung der Vorrichtung zur Begrenzung einer Überspannung im Zwischenkreis eines Traktionsstromrichters ist der Doppelschichtkondensator mittels eines Schalters von der Induktivität trennbar. Dadurch wird erreicht, dass die beiden Funktionen "Bremsen" und "Überspannungsbegrenzung" wieder voneinander trennbar sind. Sobald der Schalter des elektromechanischen Kondensators geöffnet ist, ist der zuschaltbare Widerstand über der Induktivität mit den beiden in Reihe geschalteten Halbleiterschalter verbunden. In diesem Betriebszustand arbeitet der Steller als Bremssteller, so lange Energie von den Induktionsmotoren in den Zwischenkreis geschickt wird. Ist der Bremsbetrieb beendet, so wird der Schalter des zuschaltbaren Widerstandes stromlos ausgeschaltet.

Vorteilhafte Ausgestaltungen sind den Unteransprüchen 3 bis 7 zu entnehmen.

Zur weiteren Erläuterung der Erfindung wird auf die Zeichnung Bezug genommen, in der mehrere Ausführungsbeispiele der erfindungsgemäßen Vorrichtung schematisch veranschaulicht sind.
- FIG 1: zeigt eine erste Ausführungsform der Vorrichtung zur Begrenzung einer Überspannung im Zwischenkreis eines Traktionsstromrichters nach der Erfindung, wobei in der
- FIG 2: eine vorteilhafte Ausführungsform der Vorrichtung nach FIG 1 dargestellt ist.

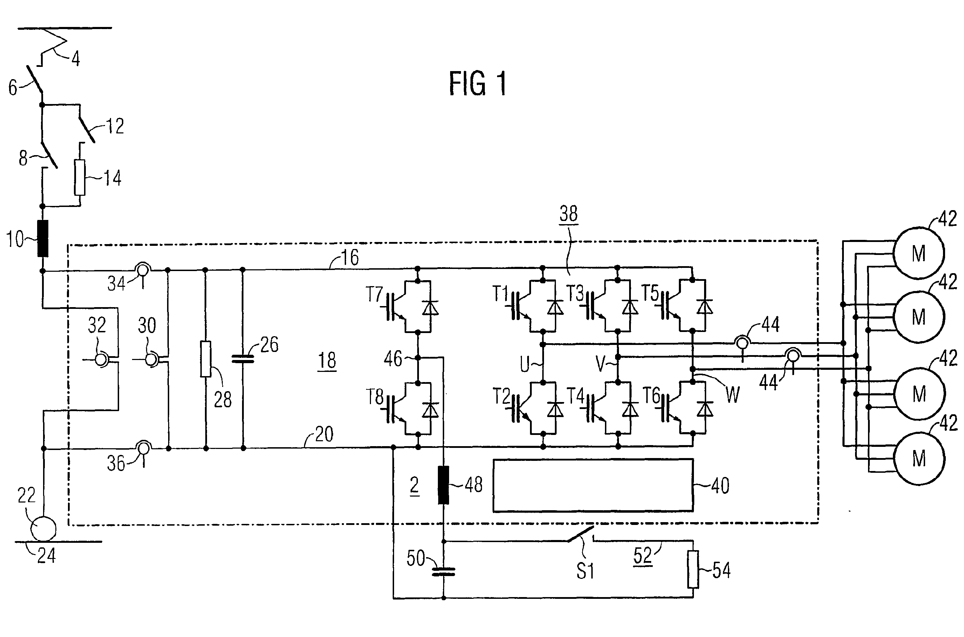

In der FIG 1 ist ein Hauptstromschaltbild eines Traktionsstromrichters eines Triebzuges mit der erfindungsgemäßen Vorrichtung 2 näher dargestellt. Eingangsseitig ist ein Stromabnehmer 4 mittels eines Trenners 6 und eines Netzschützes 8 mit einer Netzdrossel 10 verknüpft. Elektrisch parallel zum Netzschütz 8 ist eine Reihenschaltung eines Ladeschützes 12 und eines Vorladewiderstandes 14 geschaltet. Am zweiten Anschluss der Netzdrossel 10 ist eine positive Stromschiene 16 eines Zwischenkreises 18 des Traktionsstromrichters angeschlossen. Eine negative Stromschiene 20 ist mittels eines Rades 22 mit der Schiene 24 elektrisch leitend verbunden. Der Zwischenkreis 18 weist einen Zwischenkreiskondensator 26, einen Entladewiderstand 28, einen Zwischenkreisspannungswandler 30, einen Netzspannungswandler 32, zwei Stromwandler 34 und 36 und die erfindungsgemäße Vorrichtung 2 auf. Der Zwischenkreiskondensator 26, der Entladewiderstand 28, der Zwischenkreisspannungswandler 30 und die Vorrichtung 2 zur Begrenzung einer Überspannung sind zueinander elektrisch parallel und zwischen den beiden Stromschienen 16 und 20 des Zwischenkreises 18 geschaltet. Am Zwischenkreiskondensator 26 steht eine Gleichspannung an, die die Eingangsspannung für einen lastseitigen Stromrichter 38, insbesondere einen Pulswechselrichter, bildet. Der Pulswechselrichter 38 weist drei Brückenzweige mit jeweils zwei elektrisch in Reihe geschalteten abschaltbaren Halbleiterschalter T1, T2; T3, T4 und T5, T6 auf. Die zugehörigen Ansteuerungen für diese Halbleiterschalter T1 bis T6 sind in einer Steuervorrichtung 40 zusammengefasst. Die Ausgänge U, V und W dieses Pulswechselrichters 38 sind jeweils mit Fahrmotoren 42 verknüpft, wobei in zwei Ausgangsleitungen jeweils ein Motorstromwandler 44 angeordnet sind.

Die Vorrichtung zur Begrenzung einer Überspannung im Zwischenkreis 18 des Traktionsstromrichters weist zwei abschaltbare Halbleiterschalter T7 und T8 auf, die elektrisch in Reihe geschaltet sind. Am Verbindungspunkt 46 dieser beiden abschaltbaren Halbleiterschalter T7 und T8 ist eine Induktivität 48 mit einem Anschluss angeschlossen, wobei der zweite Anschluss mittels eines Doppelschichtkondensator 50 mit der negativen Stromschiene 20 des Zwischenkreises 18 elektrisch leitend verbunden ist. Elektrisch parallel zum elektrochemischen Kondensator 50 ist ein zuschaltbarer Widerstand 52 schaltbar, wobei dieser zuschaltbare Widerstand 52 einen Schalter S1, insbesondere ein Schütz, und einen Widerstand 54 aufweist, die elektrisch in Reihe geschaltet sind. Die beiden abschaltbaren Halbleiterschalter T7 und T8 bilden mit der Induktivität einen Hoch- und Tiefsetzsteller, womit Energie aus dem Zwischenkreis 18 in den Doppelschichtkondensator 50 und umgekehrt wandert.

Als abschaltbare Halbleiterschalter T7 und T8 sind Insulated-Gate-Bipolare-Transistoren vorgesehen. Dadurch entspricht diese Reihenschaltung einem Brückenzweig des Pulswechselrichters 38. Dadurch kann ein Brückenmodul des Pulswechselrichters 38 ebenfalls für die Vorrichtung zur Begrenzung einer Überspannung verwendet werden, so dass ein gesonderter Modulaufbau entfallen kann.

Der Doppelschichtkondensator 50 bezeichnet nicht nur einen Kondensator, sondern eine Vielzahl von diesen, die zu einem Kondensatormodul geschaltet sind. Trotz dieses Aufbaus wird wie beim Zwischenkreiskondensator 26 von einem Kondensator gesprochen. Dieser Doppelschichtkondensator 50 kann eine Kapazität von beispielsweise 10F bei einer Kondensatorspannung von beispielsweise 600V aufweisen.

Tritt im Zwischenkreis eine Überspannung auf, die entweder durch Sprünge in der Netzspannung oder Leistungsschwankungen in der Traktionsleistung verursacht sind, so werden diese mit dem Zwischenkreisspannungswandler 30 erfasst und einer Steuereinrichtung der beiden abschaltbaren Halbleiterschalter T7 und T8 zugeführt. Diese nicht näher dargestellte Steuereinrichtung steuert die abschaltbaren Halbleiterschalter T7 und T8 derart, dass Energie in den Doppelschichtkondensator 50 verschoben wird. Durch diese Energieverschiebung wird die auftretende Überspannung abgebaut. Bei diesen genannten Überspannungen handelt es sich um kurze Überspannungen, die durch einen Tiefsetzstellerbetrieb der beiden abschaltbaren Halbleiterschalter T7 und T8 im Zwischenkreis 18 abgebaut werden.

Beim Abbau von Überspannungen im Zwischenkreis 18 steigt die Spannung am Doppelschichtkondensator 50 an. Erreicht diese Spannung einen vorbestimmten Maximalwert, wird der zuschaltbare Widerstand 52 durch Schließen des Schützes S1 elektrisch parallel zum Doppelschichtkondensator 50 geschaltet. Dadurch wird dieser Doppelschichtkondensator 50 auf seine Nennspannung gehalten. Der weitere Abbau einer auftretenden Überspannung im Zwischenkreis 18 wird nun vom zugeschalteten Widerstand 54 abgebaut. Nach Abbau der Überspannung kann mittels des parallel geschalteten Widerstandes 54 der Doppelschichtkondensator 50 entladen werden. Unterschreitet die Spannung am Kondensator 50 einen vorbestimmten unteren Wert, so wird das Schütz S1 geöffnet. Auf diese Weise wird der Doppelschichtkondensator 50 auf einen Ladezustand gehalten, der immer ausreicht, eine auftretende Überspannung aus dem Zwischenkreis 18 abzubauen. Der Widerstand 54 ist so ausgelegt, dass dieser bei maximaler Kondensatorspannung die maximale Bremsleistung aufnehmen kann.

Die Auslegung ist dabei derart, dass kurzzeitige Überspannungen immer mit Hilfe des Tiefsetzstellers T7/T8 und des Doppelschichtkondensators 50 abgebaut werden können. Der Tiefsetzsteller weist hierfür zu vernachlässigende Schaltzustände auf. Demgegenüber dient der Widerstand 54 mit dem Schalter S1 dem Abbau "langsamer" Überspannungen durch Bremsvorgängen. Selbst bei hoch geladenen Doppelschichtkondensatoren 50 reicht den Spannungsreserven vom Doppelschichtkondensator 50 aus, um bei Überspannungen die Zeit zu überbrücken, bis der Schalter S1, insbesondere ein Schütz, zuschaltet.

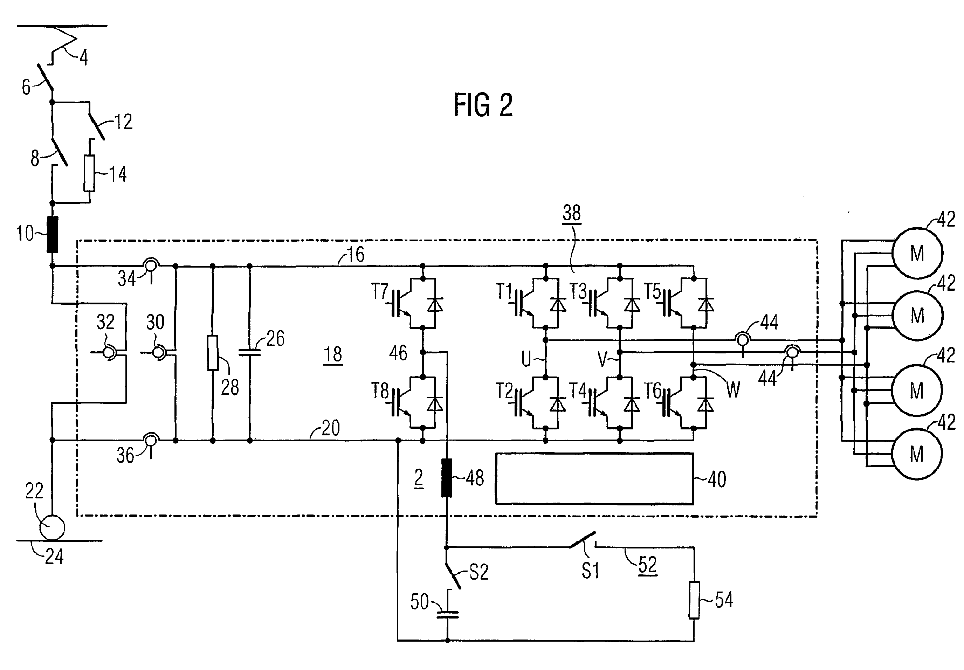

In der FIG 2 ist eine vorteilhafte Ausführungsform der Vorrichtung zur Begrenzung von Überspannungen in einem Zwischenkreis 18 gemäß FIG 1 dargestellt. Diese vorteilhafte Ausführungsform unterscheidet sich von der Ausführungsform gemäß FIG 1 dadurch, dass der Doppelschichtkondensator 50 mittels eines weiteren Schalters S2, insbesondere ein Schütz, von der Induktivität 48 und damit vom Steller, bestehend aus den beiden abschaltbaren Halbleiterschaltern T7 und T8 und der Induktivität, trennbar ist. Wenn der Doppelschichtkondensator 50 nicht mehr für weitere Bremsenergie aufnahmefähig ist, wird der Schalter S1 geschlossen, wodurch der zuschaltbare Widerstand 52 elektrisch parallel zum Doppelschichtkondensator 50 geschaltet ist. Außerdem wird der Schalter S2 des Doppelschichtkondensators 50 geöffnet. Durch diese Schalthandlungen ist einerseits der Doppelschichtkondensator 50 davor geschützt, seine Nennspannung für eine längere Zeit zu überschreiten, und andererseits die weiterhin auftretende Überspannung im Zwischenkreis 18 kann weiter abgebaut werden. In diesem Schaltzustand arbeitet der Hoch- und Tiefsetzsteller als Bremssteller und der Doppelschichtkondensator 50 verharrt im Zustand vor der Schalthandlung. Sobald keine Überspannung mehr im Zwischenkreis 18 vorhanden ist, fließt kein Strom mehr durch den zuschaltbaren Widerstand 52, so dass der Schalter S1 stromlos ausgeschaltet werden kann. Danach wird der Doppelschichtkondensator 50 wieder zugeschaltet, damit in einem Beschleunigungsbetrieb die gespeicherte Energie des Doppelschichtkondensators 50 verwendet werden kann.

Durch die erfindungsgemäße Vorrichtung wird ein Doppelschichtkondensator 50 als Überspannungsbegrenzer eingesetzt, wobei zum Schutz dieses elektrochemischen Kondensators 50 ein zuschaltbarer Widerstand 52 verwendet wird, dessen Widerstand 54 so ausgelegt ist, dass dieser bei maximaler Kondensatorspannung eine maximale Bremsenergie aufnehmen kann. Somit erhält man eine einfache Vorrichtung, die zwei Funktionen, nämlich "Bremsen" und "Überspannungsbegrenzung" ausführen kann.

## Patentansprüche

1. Vorrichtung (2) zur Begrenzung einer Überspannung im Zwischenkreis (18) eines Traktionsstromrichters, die zwei elektrisch in Reihe geschaltete abschaltbare Halbleiterschalter (T7, T8), eine Induktivität (48) und einen Doppelschichtkondensator (50) aufweist, wobei die Reihenschaltung elektrisch parallel zum Zwischenkreis (18) des Traktionsstromrichters geschaltet ist, wobei die Induktivität (48) und der Doppelschichtkondensator (50) elektrisch in Reihe und diese Reihenschaltung zwischen einem Verbindungspunkt (46) der beiden abschaltbaren Halbleiterschalter (T7, T8) und einer negativen Stromschiene (20) des Zwischenkreises (18) geschaltet sind,
**dadurch gekennzeichnet, dass** ein mittels eines Schalters (S1) zuschaltbarer Widerstand (54) vorgesehen ist, wobei dieser zuschaltbare Widerstand (54) elektrisch parallel zum Doppelschichtkondensator (50) schaltbar ist.

2. Vorrichtung (2) nach Anspruch 1,
**dadurch gekennzeichnet, dass** der Doppelschichtkondensator (50) mittels eines Schalters (S2) von der Induktivität (48) trennbar ist.

3. Vorrichtung (2) nach Anspruch 1 oder 2,
**dadurch gekennzeichnet, dass** als Schalter (S1, S2) jeweils ein mechanischer Schalter vorgesehen ist.

4. Vorrichtung (2) nach Anspruch 3,
**dadurch gekennzeichnet, dass** als mechanischer Schalter ein Schütz vorgesehen ist.

5. Vorrichtung (2) nach einem der vorgenannten Ansprüche,
**dadurch gekennzeichnet, dass** als abschaltbarer Halbleiterschalter (T7, T8) jeweils ein Insulated-Gate-Bipolare-Transistor vorgesehen ist.

6. Vorrichtung (2) nach einem der vorgenannten Ansprüche,
**dadurch gekennzeichnet, dass** als Widerstand ein Bremswiderstand vorgesehen ist.

7. Vorrichtung (2) nach Anspruch 5,
**dadurch gekennzeichnet, dass** der Bremswiderstand derart bemessen ist, dass dieser bei maximaler Kondensatorspannung eine maximale Bremsleistung aufnehmen kann.

## Claims

1. Apparatus (1) for limiting an overvoltage in the intermediate circuit (18) of a traction power converter, comprising two disconnectable semiconductor switches (T7, T8) which are connected in series, an inductor (48) and a dual layer capacitor (50), wherein the series circuit is connected electrically in parallel with the intermediate circuit (18) of the traction power converter, wherein the inductor (48) and the dual layer capacitor (5) are connected electrically in series and this series circuit is connected between a connecting point (46) of the two disconnectable semiconductor switches (T7, T7) and a negative busbar (20) of the intermediate circuit (18),
**characterised in that**
provision is made for a resistor (54) which can be connected by means of a switch (S1), wherein this connectable resistor (54) can be electrically connected in parallel with the dual layer capacitor (50).

2. Apparatus (2) according to claim 1,
**characterised in that**
the dual layer capacitor (50) can be isolated from the inductor (48) by means of a switch (S2).

3. Apparatus (2) according to claim 1 or 2,
**characterised in that**
a mechanical switch is provided in each instance as a switch (S1, S2) .

4. Apparatus (2) according to claim 3,
**characterised in that**
a contactor is provided as a mechanical switch.

5. Apparatus (2) according to one of the cited claims,
**characterised in that**
an insulated gate bipolar transistor is provided in each instance as the disconnectable semiconductor switch (T7, T8).

6. Apparatus (2) according to one of the afore-cited claims,
**characterised in that**
a braking resistor is provided as the resistor.

7. Apparatus (2) according to claim 5,
**characterised in that**
the braking resistor is rated such that it can accept a maximum braking power at a maximum capacitor voltage.

## Revendications

1. Dispositif ( 2 ) de limitation d'une surtension dans le circuit ( 18 ) intermédiaire d'un convertisseur de courant de traction, qui a deux commutateurs ( T7, T8 ) à semiconducteur pouvant être bloqués et montés en série électriquement, une inductance ( 48 ) et un condensateur ( 50 ) à couche double, le circuit série étant monté électriquement en parallèle au circuit ( 18 ) intermédiaire du convertisseur de courant de traction, l'inductance ( 48 ) et le condensateur ( 50 ) à couche double étant montés électriquement en série et ce circuit série étant monté entre un point ( 46 ) de liaison des deux commutateurs ( T7, T8 ) à semiconducteur pouvant être bloqués et une barre ( 20 ) de courant négative du circuit ( 18 ) intermédiaire, **caractérisé en ce qu'**il est prévu une résistance ( 50 ) pouvant être mise en circuit au moyen d'un interrupteur ( S1 ), cette résistance ( 54 ) pouvant être mise en circuit pouvant être montée électriquement en parallèle avec le condensateur ( 50 ) à couche double.

2. Dispositif ( 2 ) suivant la revendication 1,
**caractérisé en ce que** le condensateur ( 50 ) à couche double peut être séparé de l'inductance ( 48 ) au moyen d'un interrupteur ( S2 ).

3. Dispositif ( 2 ) suivant la revendication 1 ou 2,
**caractérisé en ce qu'**il est prévu respectivement un interrupteur mécanique comme interrupteur ( S1, S2 ).

4. Dispositif ( 2 ) suivant la revendication 3,
**caractérisé en ce qu'**il est prévu un contacteur comme interrupteur mécanique.

5. Dispositif ( 2 ) suivant l'une des revendications précédentes,
**caractérisé en ce qu'**il est prévu respectivement un transistor bipolaire à grille isolée comme commutateur ( T7, T8 ) à semiconducteur pouvant être bloqué.

6. Dispositif ( 2 ) suivant l'une des revendications précédentes,
**caractérisé en ce qu'**il est prévu une résistance de freinage comme résistance.

7. Dispositif ( 2 ) suivant la revendication 5,
**caractérisé en ce que** la résistance de freinage a des dimensions telles qu'elle peut absorber une puissance de freinage maximum à une tension maximum du condensateur.
